# EUROPÄISCHE PATENTSCHRIFT

(11) **EP 0 687 606 B1**
(45) Veröffentlichungstag und Bekanntmachung des Hinweises auf die Patenterteilung: **02.12.1998**
(21) Anmeldenummer: 95114028.4
(22) Anmeldetag: 20.09.1993
(51) Int. Cl.: B60T 8/36

(54) **Hydraulikaggregat für schlupfgeregelte Bremsanlagen**
Hydraulic unit for antilock brake systems
Unité hydraulique pour systèmes de freinage antiblocage

(30) Priorität: 09.10.1992 DE 4234013; 27.02.1993 DE 4306222
(43) Veröffentlichungstag der Anmeldung: 20.12.1995
(62) Teilanmeldung aus: 93920776.7
(73) Patentinhaber: ITT Automotive Europe GmbH, 60488 Frankfurt am Main (DE)
(72) Erfinder: Zaviska, Dalibor, D-65760 Eschborn/Ts. (DE)

(56) Entgegenhaltungen:
- EP-A- 0 373 551
- EP-A- 0 478 933
- WO-A-91/16220
- WO-A-91/16221
- WO-A-93/08050
- GB-A- 2 161 231

## Beschreibung

Die Erfindung betrifft ein Hydraulikaggregat für schlupfgeregelte Bremsanlagen nach dem Oberbegriff des Anspruchs 1.

In der DE-A-41 07 625 ist bereits ein Hydraulikaggregat für schlupfgeregelte Kraftfahrzeug-Bremsanlagen beschrieben, dessen Ventilaufnahmekörper unmittelbar an einem die Speicher-, Druckerzeuger- und Antriebselemente aufweisen Zentralgehäuse angeflanscht ist. Die vorbeschriebenen Fuktionselemente sind allseitig verteilt in Aufnahmebohrungen des Zentralgehäuses angeordnet, so daß zur Herstellung des komplizierten Zentralgehäuses und des separat zu fertigenden Ventilaufnahmekörpers im Bearbeitungszentrum unter anderem eine Vielzahl von Arbeitspositionen im Ablaufprogramm des Werkzeugautomaten zu berücksichtigen sind. Überdies ist die Gerätegröße des Hydraulikaggregates aufgrund des erläuterten Aufbaus nicht mehr zu verkleinern, was die Wahl der Einbaulage bzw. des Einbauortes erschwert.

Aus der GB-A-2 161 231 ist ein Hydraulikaggregat für eine schlupfgeregelte Bremsanlage bekannt. Das Gehäuse des Hydraulikaggregats weist an einer Stirnseite eine Öffnung zur Einführung mehrerer Kabeln auf, die einen im Gehäuse angeordneten Drehzahlsensor sowie auch wahlweise im Gehäuse befindliche Magnetventile elektrisch mit einem außerhalb des Hydraulikaggregats befindlichen Steuergerät verbinden.

Daher ist es die Aufgabe der Erfindung, ein möglichst kompaktbauendes Hydraulikaggregat zu schaffen, das sich auf möglichst einfache Weise präzise und kostengünstig herstellen läßt.

Diese Aufgabe wird erfindungsgemäß durch die Merkmale des Patentanspruchs 1 gelöst.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen näher dargestellt und erläutert werden.

Es zeigen:
- Fig. 1: eine Draufsicht auf das Hydraulikaggregat,
- Fig. 2: einen Querschnitt des Hydraulikaggregates an der Schnittstelle A-A nach Figur 1.

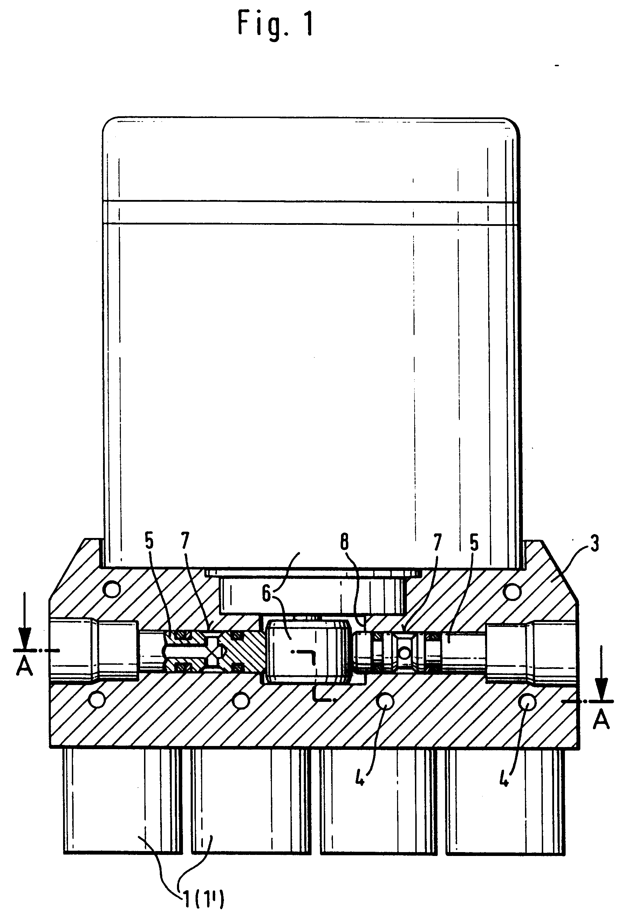

Die Figur 1 skizziert die grundlegende Anordnung der Ventil 1,1' - , Druckerzeuger 5 - und Antriebselemente 6 im Ventilaufnahmekörper 3. Sowohl die Aufnahmebohrung 8, welche die aus Elektromotor und Exzenterantrieb gebildeten Antriebselemente 6 aufnimmt, wie auch die Ventilelemente 1,1' sind achsparallel ausgerichtet. Hierzu erstreckt sich die Aufnahmebohrung 7 des als doppelflutige Radialkolbenpumpe ausgeführten Druckzeugerelementes 5 quer zur Achse des Elektromotors und zu den Ventilachsen. In der nachfolgend gezeigten Schnittdarstellung des Ventilaufnahmekörpers 3 befindet sich somit das Druckerzeugerelement 5 zwischen den Anschlußebenen der Ventilelemente 1,1' und des Elektromotors.

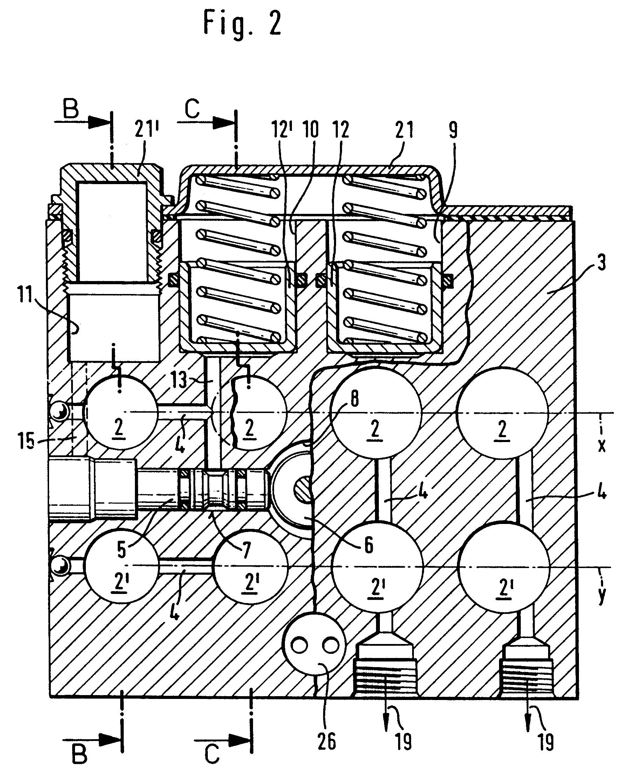

Figur 2 zeigt einen Querschnitt durch den Ventilaufnahmekörper 3 an der Stelle A-A gemäß Figur 1. Der Ventilaufnahmekörper 3 weist eine im wesentlichen quadratische Blockform auf, in die zwei parallel zueinander liegende Reihen von Ventilaufnahmebohrungen 2,2' eingebracht sind. Zwischen den beiden Ventilreihen x,y befindet sich die hierzu achsparallel verlaufende Aufnahmebohrung 7 des Druckerzeugerelementes 5. Außerhalb zu den beiden Ventilreihen x,y gelegen, befindet sich die lotrecht zu den Ventilaufnahmebohrungen 2,2' angeordneten Aufnahmebohrungen 9,10 für die als Bestandteil der Speicherelemente wirksamen Druckspeicherkolben 12,12'. Die Druckmittelbohrungen 4,13 verbinden die Ventilaufnahmebohrungen 2 der in der Grundstellung als Auslaßventile wirksamen elektromagnetisch geschlossenen Ventilelemente 1,1' mit den Aufnahmebohrungen 9,10 der Speicherelemente. Eine neben den Aufnahmebohrungen 9,10 der Speicherelemente und dazu parallel angeordnete weitere Aufnahmebohrung 11 steht über eine Druckmittelbohrung 15 mit dem druckseitigen Pumpenabschnitt der Aufnahmebohrung 7 in Verbindung. Hydraulische Druckspitzen des Druckerzeugeelementes gelangen somit zur Dämpfung der Pumpengeräusche in die zugeordnete Aufnahmebohrung 11. Die Aufnahmebohrung 11 ist entweder über einen separaten Deckel oder mitunter durch den als Tiefziehteil kappenförmig ausgebildeten Deckel 21 der Aufnahmebohrungen 9,10 integriert. In der gezeigten Ausführungsform eignet sich der als Schraubverschlußstopfen ausgebildete separate Deckel 21 gleichzeitig zur Einspannung und Anpressung des die beiden Aufnahmebohrungen 9,10 verschließenden Deckels 21, so daß Befestigungsmittel für den Deckel 21 eingespart werden können. Die den Speicherelementen zugewandte Ventilreihe x nimmt ausschließlich die in der Grundstellung elektromagnetisch geschlossenen Ventilelemente (Auslaßventile) auf. Die zweite Ventilreihe y faßt die in der Grundstellung elektromagnetisch geöffneten Ventilelemente (Einlaßventile) zusammen. Hierdurch ergibt sich die abbildungsgemäße Kanalführung, wonach die Druckmittelbohrungen 4 den Druckmittelverbraucher 19 jeweils mit den Ventilaufnahmebohrungen 2,2' der Einlaß- und Auslaßventile verbinden. Durch die gezeigte Verbohrung des Ventilaufnahmekörpers 3 ist u.a. auch vorgesehen, die Kabeldurchführung 26 für den Elektromotor unmittelbar im Ventilaufnahmekörper 3 anzuordnen.

In einer Zusammenfassung wird nachfolgend die Funktionsweise des nach Figur 1 bis 2 gezeigten Hydraulikaggregates für einen Radbremskreis einer schlupfgeregelten Kraftfahrzeugbremsanlage erläutert.

Die Druckmitteleinspeisung in das Hydraulikaggregat erfolgt durch Betätigung des Hauptzylinders (Druckmittelversorger 14), womit Druckmittel in die das Einlaßventil aufnehmende Ventilaufnahmebohrung 2' und damit zur Radbremse (Druckmittelverbraucher 19) gelangt. Die das Einlaßventil mit dem Auslaßventil verbindende Druckmittelbohrung 4 steht ebenfalls unter dem fußkraftproportionalen Druck, während das Auslaßventil die zum Druckspeicherkolben 21 führende Druckmittelbohrung 13 sperrt. Mit Beginn der Bremsschlupfregelung treibt der Elektromotor (Antriebselement 6) die Radialkolbenpumpe (Druckerzeugerelement 5) an, womit das über die Druckmittelbohrung 13 jeweils aus dem Speicherelement (Aufnahmebohrung 9,10) angesaugte Druckmittelvolumen über die Druckmittelbohrung 15 in die Geräuschdämpfungskammer (Aufnahmebohrung 11) gefördert wird, um von dort über die Blende 27 den Kanal (16) auf den Tandemhauptzylinder (Druckmittelversorger 14) zu wirken, wobei über die Ventilaufnahmebohrungen 2,2' die Druckmodulation in Abhängigkeit von der elektromagnetischen Ansteuerung der Einlaß- und Auslaßventile (Ventilelemente 1,1') in jeder entsprechend zugehörigen Radbremse (Druckmittelverbraucher 19) erfolgt.

### Besugszeichenliste:

- 1,1': Ventilelemente
- 2,2': Ventilaufnahmebohrung
- 3: Ventilaufnahmekörper
- 4: Druckmittelbohrung
- 5: Druckerzeugerelement
- 6: Antriebselement
- 7,8,9,10,11: Aufnahmebohrungen
- 12,12': Druckspeicherkolben
- 13: Druckmittelbohrung
- 14: Druckmittelversorger
- 15: Druckmittelbohrung
- 16: Kanal
- 17: Filterelement
- 19: Druckmittelverbraucher
- 21: Deckel
- 26: Kabeldurchführung
- 27: Blende

## Patentansprüche

1. Hydraulikaggregat für schlupfgeregelte Bremsanlagen, mit mehreren an einem Aufnahmekörper (3) angeordneten hydraulischen, mechanischen und/oder elektrisch betätigbaren Funktionselementen, wie Speicher-, Ventil-, Druckerzeuger- und Antriebselemente (1, 1', 5, 6), mit mehreren die Funktionselemente miteinander verbindenden Druckmittelkanälen (4, 15, 16) , die eine hydraulisch schaltbare Verbindung zwischen wenigstens einer Druckmittelquelle (14) und einem Druckmittelverbraucher (19) herzustellen vermögen sowie mit einer Steuervorrichtung, die mittels elektrischer Leiter mit den Ventil- und Antriebselementen (1, 1', 6) verbindbar ist, dadurch **gekennzeichnet**, daß für einen Elektromotor, der Bestandteil des für die Druckerzeugerelemente (5) vorgesehen Antriebselements (6) ist, im Aufnahmeträger (3) eine Kabeldurchführung (26) angeordnet ist.

2. Hydraulikaggregat nach Anspruch 1, dadurch **gekennzeichnet**, daß die Ventilelemente (1,1') in mehreren Ventilaufnahmebohrungen (2,2') des Ventilaufnahmekörpers (3) einer ersten und einer zweiten Ventilreihe (x,y) angeordnet sind, daß zwischen den diametral ausgerichteten beiden Ventilreihen (x,y) mehrere die Ventilelemente (1,1') miteinander verbindende Druckmittelbohrungen (4) und die das Druckerzeugerelement (5) und das Antriebselement (6) aufweisenden Aufnahmebohrungen (7,8) vorgesehen sind, und daß außerhalb den beiden Ventilreihen (x,y) weitere achsparallel zueinander ausgerichtete Aufnahmebohrungen (9,10,11) in den Ventilaufnahmekörper (3) einmünden.

3. Hydraulikaggregat nach Anspruch 2, dadurch **gekennzeichnet**, daß die das Druckerzeugerelement (5) aufweisende Aufnahmebohrung (7) zwischen den beiden Ventilreihen (x,y) parallel angeordnet ist.

4. Hydraulikaggregat nach Anspruch 1 oder 2, dadurch **gekennzeichnet**, daß die die Antriebselemente (6) aufweisende Aufnahmebohrung (8) senkrecht sowie konzentrisch zur Aufnahmebohrung (7) des Druckerzeugers gerichtet ist.

5. Hydraulikaggregat nach mindestens einem der vorhergehenden Ansprüche, dadurch **gekennzeichnet**, daß in die außerhalb den beiden Ventilreihen (x,y) angeordneten Aufnahmebohrungen (9,10) jeweils ein Druckspeicherkolben (12,12') eingesetzt ist, der über eine Druckmittelbohrung (13) jeweils eine Verbindung zur Aufnahmebohrung (7) des Druckerzeugeelementes (5) und zur Aufnahmebohrung (2) eines in der Grundstellung elektromagnetisch geschlossenen Ventilelementes (1) aufweist.

6. Hydraulikaggregat nach Anspruch 2, dadurch **gekennzeichnet**, daß zwischen der außerhalb den beiden Ventilreihen (x,y) angeordneten weiteren Aufnahmebohrung (11) des Geräuschdämpfers und der Aufnahmebohrung (7) des Druckerzeugerelementes (5) jeweils eine Druckmittelbohrung (15) angeordnet ist, die jeweils über eine hermetisch abschließbare Aufnahmebohrung (11) eine hydraulische Verbindung zwischen der Druckseite des Druckerzeugerelementes (5) und des zum Druckmittelversorger (14) führenden Kanals (16) herstellt.

7. Hydraulikaggregat nach Anspruch 6, dadurch **gekennzeichnet**, daß der Kanal (16), der die hermetisch abschließbare weitere Aufnahmebohrung (11) mit dem Druckmittelversorger (14) verbindet, ein in die Aufnahmebohrung (11) erstreckendes Filterelement (17) und eine Blende (27) aufweist, und daß der Kanal (16) in Montageposition des Hydraulikaggregates eine die Entlüftbarkeit der Aufnahmebohrung (11) fördernden geodätischen Höhenunterschied zur Druckmittelbohrung (15) des Druckerzeugers (5) aufweist.

## Claims

1. Hydraulic unit for slip-controlled brake systems with several hydraulically, mechanically and/or electrically operable functional elements arranged in an accommodating member (3), as e.g. accumulator elements, valve elements, pressure generating and driving elements (1,1',5,6), with several pressure fluid channels (4,15,16) which interconnect the functional elements and are adapted to provide a hydraulically operable connection between at least one pressure fluid source (14) and a pressure fluid consumer (19), as well as with one control device which can be connected with the valve elements and driving elements (1,1',6) by means of electrical conductors, **characterized** in that a cable bushing (26) is arranged in the accommodating member (3) for an electric motor which is a component part of the driving element (6) provided for the pressure generating element (5).

2. Hydraulic unit as claimed in claim 1,
**characterized** in that the valve elements (1,1') are arranged in several valve accommodating bores (2,2') of the valve accommodating member (3) of a first and a second valve row (x,y), in that between the two diametrically oriented valve rows (x,y) are provided several pressure fluid bores (4) interconnecting the valve elements (1,1') and the location bores (7,8) accommodating the pressure generating element (5) and the driving element (6), and in that outside the two valve rows (x,y) further location bores (9,10,11) extending parallel to the axis open into the valve accommodating member (3).

3. Hydraulic unit as claimed in claim 2,
**characterized** in that the location bore (7,) accommodating the pressure generating element (5) is arranged in parallel to and between the valve rows (x,y).

4. Hydraulic unit as claimed in claims 1 or 2,
**characterized** in that the location bore (8) accommodating the driving elements (6) extends perpendicularly and concentrically to the location bore (7) of the pressure generating element.

5. Hydraulic unit as claimed in any one of the preceding claims,
**characterized** in that inserted in each of the location bores (9, 10) outside the two valve rows (x,y) is one pressure accumulator piston (12,12') which by a pressure fluid bore (13) is connected to the location bore (7) of the pressure generating element (5) and to the location bore (2) of a valve element (1) being electromagnetically closed in its normal position.

6. Hydraulic unit as claimed in claims 2,
**characterized** in that a pressure fluid bore (15) is arranged between the location bore (11) of the noise damper which lies outside the two valve rows (x,y) and the location bore (7) of the pressure generating element (5), which bore (15) provides for a hydraulic connection between the delivery side of the pressure generating element (5) and the channel (16) leading to the pressure fluid supply means (14) by means of a hermetically sealable location bore (11).

7. Hydraulic unit as claimed in claim 6,
**characterized** in that channel (16) which connects the hermetically sealable location bore (11) to the pressure fluid supply means (14) includes a filter element (17) extending into the location bore (11) and a restrictor (27), and in that the channel (16) in the mounting position of the hydraulic unit is provided with a geodetic level difference relative to the pressure fluid bore (15) of the pressure generating element (5) which permits the venting of the location bore (11).

## Revendications

1. Ensemble hydraulique pour système de freinage à régulation du glissement, comprenant plusieurs éléments fonctionnels, tels qu'éléments d'accumulateur, de valve, de générateur de pression et de moyens d'entraînement (1, 1', 5, 6), disposés sur un corps de réception (3) et pouvant être actionnés hydrauliquement, mécaniquement et/ou électriquement, plusieurs conduits d'agent de pression (4, 15, 16), reliant entre eux les éléments fonctionnels et pouvant produire une liaison commutable hydrauliquement entre au moins une source d'agent de pression (14) et un utilisateur d'agent de pression (19), et un dispositif de commande qui peut être relié aux éléments de valve et de moyens d'entraînement (1, 1', 6) au moyen de conducteurs électriques, caractérisé en ce qu'un passage de câble (26) est disposé dans le support de réception (3) pour un moteur électrique qui est une partie constitutive de l'élément de moyens d'entraînement (6) prévu pour les éléments de générateur de pression (5).

2. Ensemble hydraulique suivant la revendication 1, caractérisé en ce que les éléments de valve (1, 1') sont disposés dans plusieurs alésages de réception de valve (2, 2') du corps de réception de valves (3) suivant une première et une seconde rangées de valve (x, y), en ce que plusieurs perçages d'agent de pression (4), reliant entre eux les éléments de valve (1, 1'), et les alésages de réception (7, 8) comportant l'élément générateur de pression (5) et l'élément de moyens d'entraînement (6) sont prévus entre les deux rangées de valves (x, y) disposées diamétralement et en ce que d'autres alésages de réception (9, 10, 11) orientés avec leurs axes parallèles entre eux débouchent dans le corps de réception de valves (3) à l'extérieur par rapport aux deux rangées de valves (x, y).

3. Ensemble hydraulique suivant la revendication 2, caractérisé en ce que l'alésage de réception (7) comportant l'élément de générateur de pression (5) est disposé parallèlement entre les deux rangées de valves (x, y).

4. Ensemble hydraulique suivant la revendication 1 ou 2, caractérisé en ce que l'alésage de réception (8) comportant les éléments de moyens d'entraînement (6) est orienté perpendiculairement et concentriquement à l'alésage (7) de réception du générateur de pression.

5. Ensemble hydraulique suivant au moins l'une des revendications précédentes, caractérisé en ce qu'un piston d'accumulateur de pression (12, 12') respectif est placé dans chacun des alésages de réception (9, 10) situés à l'extérieur par rapport aux deux rangées de valves (x, y), le piston d'accumulateur de pression (12, 12') comportant, par l'intermédiaire d'un perçage d'agent de pression (13), une liaison respective avec l'alésage (7) de réception de l'élément de générateur de pression (5) et avec l'alésage (2) de réception d'un élément de valve (1) fermé par la voie électromagnétique dans sa position de base.

6. Ensemble hydraulique suivant la revendication 2, caractérisé en ce qu'un perçage d'agent de pression (15) est disposé chaque fois entre l'autre alésage (11) de réception de l'amortisseur de bruit, disposé à l'extérieur par rapport aux deux rangées de valves (x, y), et l'alésage (7) de réception de l'élément de générateur de pression (5), l'alésage d'agent de pression (15) produisant, chaque fois par l'intermédiaire d'un alésage de réception (11) obturable hermétiquement, une liaison hydraulique entre le côté de refoulement de l'élément de générateur de pression (5) et le conduit (16) menant aux moyens d'alimentation en agent de pression (14).

7. Ensemble hydraulique suivant la revendication 6, caractérisé en ce que le conduit (16), qui relie l'autre alésage de réception (11) obturable hermétiquement aux moyens d'alimentation en agent de pression 14, comporte un élément de filtre (17), s'étendant dans l'alésage de réception (11), et un étranglement (27) et en ce qu'en position de montage de l'ensemble hydraulique, le conduit (16) présente, par rapport au perçage d'agent de pression (15) du générateur de pression (5), une différence de niveau géodésique qui assure la possibilité de mise à l'air de l'alésage de réception (11).
